# EUROPÄISCHE PATENTANMELDUNG

(11) **EP 4 614 767 A1**
(43) Veröffentlichungstag der Anmeldung: **10.09.2025**
(21) Anmeldenummer: 24161494.0
(22) Anmeldetag: 05.03.2024
(51) Int. Cl.: H02K 1/276, H02K 29/08, H02K 11/215

(54) **ROTOR MIT WIEDERLÖSBAREN MAGNETEN**

(71) Anmelder: Hilti Aktiengesellschaft, 9494 Schaan (LI)
(72) Erfinder: Ruff, Christian, 86391 Stadtbergen (DE); Dotz, Boris, 86937 Scheuring (DE); Steentjes, Simon, 86807 Buchloe (DE); Asmus, Torsten, 87600 Kaufbeuren (DE); Hurka, Florian, 86459 Margertshausen (DE); Deisling, Markus, 86836 Untermeitingen (DE); Gerold, Johannes, 82418 Murnau (DE); Rehorik, Kilian, 97082 Würzburg (DE)
(74) Vertreter: Hilti Aktiengesellschaft Corporate Intellectual Property

(57) **Zusammenfassung**

Rotor für einen Elektromotor, insbesondere als Antrieb für eine Werkzeugmaschine, enthaltend einen Rotorkörper mit einer zentralen Ausnehmung zum Aufnehmen und Halten einer Welle, wobei der Rotorkörper wenigstens eine erste und zweite gegenüberliegend und um eine Rotationsachse positionierte Aussparung enthält, welche jeweils wenigstens zum wiederlösbaren Aufnehmen eines Magneten ausgestaltet ist.

Eine Magnethalteeinrichtung ist vorgesehen, welche zum wiederlösbaren Fixieren des wenigstens ersten und zweiten Magneten in einer jeweiligen Aussparung ausgestaltet ist, wenn die Magnethalteeinrichtung wenigstens anteilig in die Aussparungen eingeführt ist.

## Beschreibung

Die vorliegende Erfindung betrifft einen Rotor für einen Elektromotor, insbesondere als Antrieb für eine Werkzeugmaschine, enthaltend einen Rotorkörper mit einer zentralen Ausnehmung zum Aufnehmen und Halten einer Welle, wobei der Rotorkörper wenigstens eine erste und zweite gegenüberliegend und um eine Rotationsachse positionierte Aussparung enthält, welche jeweils wenigstens zum wiederlösbaren Aufnehmen eines Magneten ausgestaltet ist.

Des Weiteren betrifft die vorliegende Erfindung einen Elektromotor mit einem Rotor.

Darüber hinaus betrifft die vorliegende Erfindung eine Werkzeugmaschine mit einem Rotor.

Aus dem Stand der Technik sind Elektromotoren (insbesondere als Antrieb für Werkzeugmaschinen) bekannt, die zum Erzeugen eines Drehmoments im Wesentlichen einen Stator und einen relativ zu dem Stator drehbaren Rotor enthalten.

Rotoren als Komponenten bzw. Bauteile von Elektromotoren für Elektrowerkzeuge weisen zur Bildung von Magnetpolen üblicherweise Permanentmagnete auf, welche in entsprechende Aussparungen eines Rotorblechpakets eingepasst sind. Für gewöhnlich sind die Permanentmagnete dauerhaft mit dem Rotorblechpaket verklebt.

Um die Permanentmagnete für Recyclinggründe wieder aus dem Rotorblechpaket herauszulösen, muss das Rotorblechpaket vollständig auseinandergebrochen werden.

Es ist damit Aufgabe der vorliegenden Erfindung das vorstehend beschriebene Problem zu lösen.

Die Aufgabe wird gelöst durch den Gegenstand des unabhängigen Patentanspruchs 1, 6 und 7. Weitere vorteilhafte Ausführungsformen des erfindungsgemäßen Gegenstands sind in den entsprechenden abhängigen Patentansprüchen enthalten.

Die Aufgabe wird dabei insbesondere gelöst durch einen Rotor für einen Elektromotor, insbesondere als Antrieb für eine Werkzeugmaschine, enthaltend einen Rotorkörper mit einer zentralen Ausnehmung zum Aufnehmen und Halten einer Welle, wobei der Rotorkörper wenigstens eine erste und zweite gegenüberliegend und um eine Rotationsachse positionierte Aussparung enthält, welche jeweils wenigstens zum wiederlösbaren Aufnehmen eines Magneten ausgestaltet ist.

Erfindungsgemäß ist eine Magnethalteeinrichtung vorgesehen, welche zum wiederlösbaren Fixieren des wenigstens ersten und zweiten Magneten in einer jeweiligen Aussparung ausgestaltet ist, wenn die Magnethalteeinrichtung wenigstens anteilig in die Aussparungen eingeführt ist.

Entsprechend einer alternativen und vorteilhaften Ausführungsform kann es möglich sein, dass die Magnethalteeinrichtung ein Flanschelement sowie wenigstens ein erstes und zweites Stiftelement enthält, wobei das erste und zweite Stiftelement zum jeweiligen Einführen in eine Aussparung und das Flanschelement zum Anliegen an einem Rotorkörperende ausgestaltet ist.

Gemäß einer weiteren vorteilhaften Ausführungsform kann es möglich sein, dass die Länge eines Stiftelements größer ist als die Länge des Rotorkörpers, sodass in einem verbundenen Zustand ein Stiftelement in axialer Richtung über den Rotorkörper hinausragt.

Entsprechend einer weiteren vorteilhaften Ausführungsform kann es möglich sein, dass wenigstens eine Leiterplatte mit wenigstens einem ersten und zweiten Halteelement zum wiederlösbaren Halten eines freien Endes eines Stiftelements enthalten ist.

Die Leiterplatte kann dabei auch als Hallplatine bezeichnet werden.

Gemäß einer weiteren vorteilhaften Ausführungsform kann es möglich sein, dass eine Aussparung einen länglichen Anteil und eine halbkreisförmigen Anteil enthält, wobei eine Querschnittsfläche des länglichen Anteils im Wesentlichen einer Querschnittsfläche eines Magneten und die eine Querschnittsfläche des halbkreisförmigen Anteils in Wesentlichen einer Querschnittsfläche eines Stiftelements entspricht.

Des Weiteren wird die Aufgabe gelöst durch einen Elektromotor mit einem Rotor.

Darüber hinaus wird die Aufgabe gelöst durch eine Werkzeugmaschine mit einem Rotor.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine erfindungsgemäße Werkzeugmaschine gemäß einer beispielhaften Ausführungsform mit einem Elektromotor;
- Figur 2: eine Vorderansicht auf einen Stator und einen Rotor;
- Figur 3: eine perspektivische Ansicht auf den Rotor gemäß einer ersten Ausführungsform;
- Figur 4: eine Vorderansicht auf den Rotor gemäß der ersten Ausführungsform;
- Figur 5: eine Vorderansicht auf den Rotor gemäß einer zweiten Ausführungsform;
- Figur 6: eine Vorderansicht auf den Rotor gemäß einer dritten Ausführungsform; und
- Figur 7: eine Vorderansicht auf den Rotor gemäß einer vierten Ausführungsform.

### Ausführungsbeispiele:

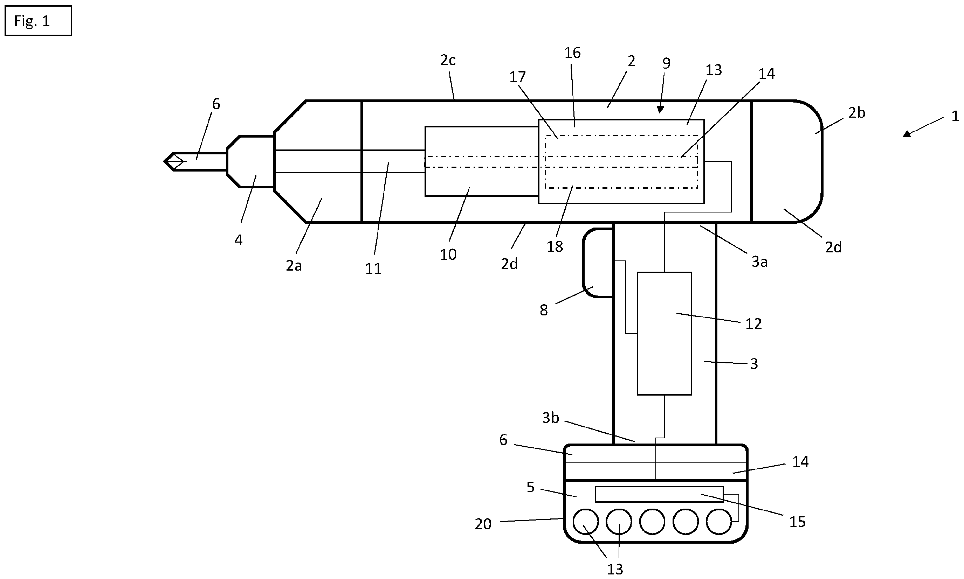

Figur 1 zeigt eine Werkzeugmaschine 1 gemäß einer beispielhaften Ausführungsform. Die Werkzeugmaschine 1 ist in Form eines Akku-Schraubers ausgestaltet.

Gemäß einem alternativen Ausführungsbeispiel kann die Werkzeugmaschine auch in Form einer Säge, eines Schleifgeräts, eines Bohrhammers oder dergleichen ausgestaltet sein.

Die als Bohrmaschine ausgestaltete Werkzeugmaschine 1 enthält dabei im Wesentlichen ein Gehäuse 2, einen Handgriff 3, eine Werkzeugaufnahme 4 und eine Energieversorgung 5.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs. In den Figuren ist das Werkzeug nicht dargestellt.

In dem vorliegenden Ausführungsbeispiel kann das Werkzeug in Form eines Bohrers ausgestaltet. An dem unteren Ende 2d des Gehäuses 2 ist ein erstes Ende 3a des Handgriffs 3 positioniert. An dem zweiten Ende 3b des Handgriffs 3 ist eine Schnittstelle 6 vorgesehen.

Wie in Figur 1 gezeigt weist der Handgriff 3 einen Aktivierungsschalter 8 auf, mit dem die Werkzeugmaschine 1 in einen Aktivierungszustand oder Deaktivierungszustand eingestellt werden kann.

An die Schnittstelle 6 kann die Energieversorgung 5 wiederlösbar befestigt werden. In dem vorliegenden Ausführungsbeispiel ist die Energieversorgung 5 in Form eines Akkumulators ausgestaltete. Die Energieversorgung 5 dient zum Versorgen der Werkzeugmaschine mit elektrischer Energie.

Entsprechend einem alternativen Ausführungsbeispiel kann die Energieversorgung 5 auch als Stromkabel zum Verbinden der Werkzeugmaschine 1 mit einer Netzstromquelle (Steckdose) ausgestaltet sein. Die als Stromkabel ausgestaltete Energieversorgung 5 ist in den Figuren nicht dargestellt.

Im Inneren des Gehäuses 2 ist im Wesentlichen ein Elektromotor 9 als Antrieb, eine Getriebevorrichtung 10, eine Antriebswelle 11 und eine Steuereinrichtung 12 positioniert.

Der Elektromotor 9, die Getriebevorrichtung 10, die Antriebswelle 11 und die Werkzeugaufnahme 4 sind so im Inneren des Gehäuses 2 zueinander angeordnet, dass ein in dem Elektromotor 9 erzeugtes Drehmoment auf die Getriebevorrichtung 10, die Antriebswelle 11 und schließlich auf die Werkzeugaufnahme 4 bzw. auf das Werkzeug übertragen werden kann.

Die Steuereinrichtung 12 ist mittels entsprechenden Leitungen L mit dem Aktivierungsschalter 8, der Akku-Schnittstelle 6 und dem Elektromotor 9 verbunden.

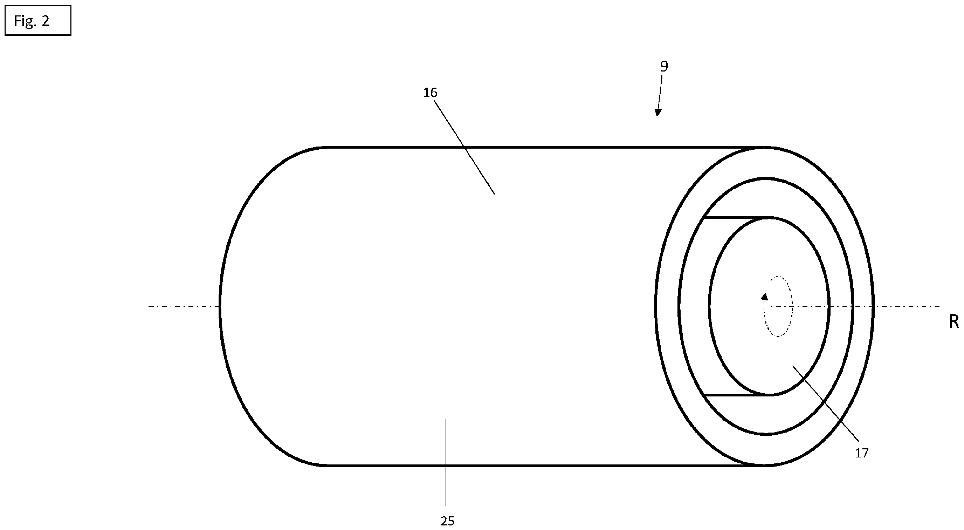

Der Elektromotor 9 ist in Form eines bürstenlosen Elektromotors ausgestaltet und enthält im Wesentlichen einen Stator 16 und einen Rotor 17, vgl. Figur 2.

Die als Akkumulator ausgestaltete Energieversorgung 5 kann mit der Werkzeugmaschine 1 wiederlösbar verbunden werden, um die Werkzeugmaschine 1 mit elektrischer Energie zu versorgen. Der Akkumulator 5 enthält im Wesentlichen ein Akku-Gehäuse 20, eine Anzahl an Energiespeicherzellen 13, eine Akku-Schnittstelle 14 sowie eine Steuerungseinrichtung 15.

Die Energiespeicherzellen 13 können auch als Akku-Zellen bezeichnet werden und sind im Inneren des Akku-Gehäuses 20 angeordnet.

Das Akku-Gehäuse 20 enthält dabei im Wesentlichen ein Deckelelement 20a, vier Seitenwände 20b und ein Bodenelement 20c.

Die Akku-Schnittstelle 14 ist an der Außenseite des Deckelelements 20a angeordnet und dient zum elektrischen bzw. elektronischen sowie mechanischen Verbinden des Akkumulators 5 mit der Werkzeugmaschine 1 oder einer Ladevorrichtung.

Die Ladevorrichtung dient zum Laden des Akkumulators 5 mit elektrischer Energie und ist in den Figuren nicht dargestellt.

Zum elektrischen bzw. elektronischen Verbinden weist die Akku-Schnittstelle 14 einen Pluskontakt, einen Minuskontakt und einen Kommunikationskontakt auf. Der Plus- und Minuskontakt dient zur Erzeugen eines Stromkreises, wenn der Akkumulator 5 mit einer Werkzeugmaschine 1 oder einer Ladevorrichtung verbunden ist. Der Kommunikationskontakt dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherzellen 13 dienen zum Aufnehmen, Speichern und erneuten Abgeben elektrischer Energie. Die Energiespeicherzellen 13 sind in zylindrischer Form sowie auf Basis einer Lithium-lonen-Technologie ausgestaltet. Jede Energiespeicherzelle 13 enthält an einem Ende eine Kontakteinrichtung, die zur Übertragung elektrischer Energie dient. Die einzelnen Kontakteinrichtung sind über entsprechende Leitungen mit der Steuerungseinrichtung 15 des Akkumulators 5 verbunden.

Alternativ können die Energiespeicherzellen 13 auch auf einer anderen geeigneten Technologie basieren.

Die zylindrische Form der Energiespeicherzellen 13 ist ebenfalls optional, sodass auch jede andere geeignete Form bzw. Geometrie gewählt werden kann. So ist es insbesondere auch möglich, dass die Energiespeicherzellen 13 als Pouchzellen ausgestaltet sind.

Es ist zudem auch möglich, dass der Akkumulator 5 sowohl zylindrische Energiespeicherzellen 13 als auch Pouch-Zellen enthält. Es ist insbesondere möglich, dass der Akkumulator 5 lediglich eine einzige zylindrische Energiespeicherzelle 13 und eine einzige Pouchzelle enthält.

Die Steuerungseinrichtung 15 regelt und steuert verschiedene Funktionen des Akkumulators 5. Zu den Funktion gehört unter anderen die Steuerung der Aufnahme und Abgabe von elektrischer Energie in bzw. aus den Energiespeicherzellen 13. Darüber hinaus wird mit Hilfe der Steuerungseinrichtung 15 die Menge an elektrischer Energie gesteuert, die von den Energiespeicherzellen 13 aufgenommen oder abgegeben werden sollen.

Wie in Figur 2 angedeutet ist der Rotor 17 im Inneren des Stators 16 positioniert und zudem drehbar zu dem Stator 16 ausgestaltet.

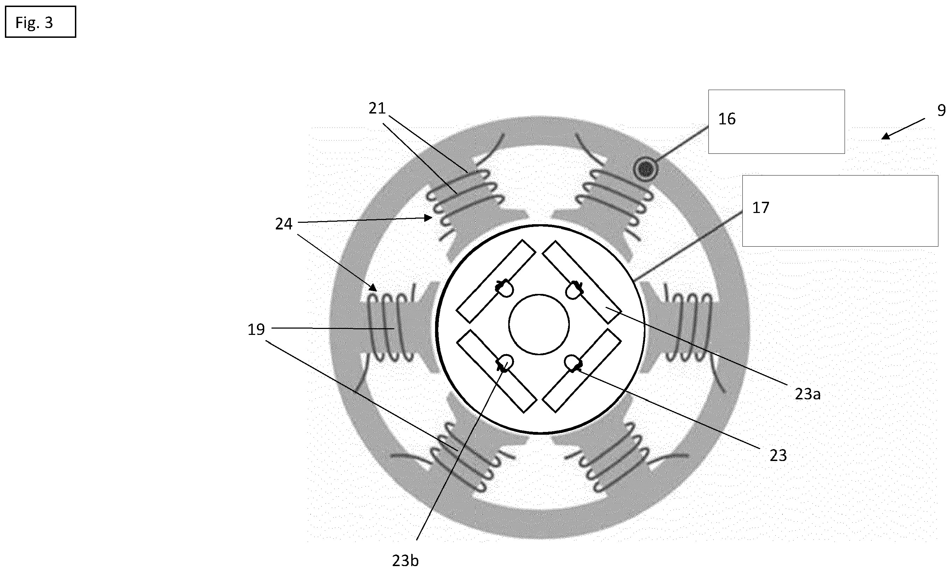

Wie in Figur 3 gezeigt enthält der Stator 16 ein Statorblechpaket 25 mit sechs radial nach innen gerichtete Polzähne 19. Das Statorblechpaket 25 besteht im Wesentlichen aus einer Anzahl an übereinander gestapelten Profilblechen. Die Profilbleche sind in den Figuren nicht einzeln dargestellt.

Es sind jeweils zwei Polzähne 19 einander gegenüber positioniert. Gemäß einer alternativen Ausführungsform können auch mehr oder weniger als sechs Polzähne 19 vorgesehen sein. Die Polzähne 19 dienen zum jeweiligen Aufnehmen eines Spulendrahts 21 zum Erzeugen einer Spule 24. Die Spulen 24 sind entsprechend über die Steuereinrichtung 12 mit der Energieversorgung 5 verbunden, um eine elektrische Spannung an die Spulen 24 anzulegen. Mit anderen Worten: die Spulen 24 werden bestromt. Mit Hilfe der Spulen 24 wird ein abwechselndes Magnetfeld MF erzeugt, durch welches der Rotor 17 gedreht wird.

Wie in den Figuren gezeigt, enthält der Rotor 17 einen zylindrischen Rotorkörper 18 mit vier Magneten 22. In dem vorliegenden Ausführungsbeispiel sind die Magnete 22 als Permanentmagnete ausgestaltet.

Des Weiteren ist in dem vorliegenden Ausführungsbeispiel der Rotorkörper 18 als Rotorblechpaket 26 ausgestaltet. Das Rotorblechpaket 26 besteht dabei aus einer Anzahl an aneinandergereihten Blechen. Die einzelnen Bleche des Rotorblechpakets 26 sind in den Figuren nicht gezeigt. Des Weiteren enthält der Rotorkörper 18 eine zentrale Ausnehmung 27 zum Aufnehmen und Halten einer Rotorwelle 28.

Der Rotorkörper 18 enthält ferner eine Anzahl an Aussparungen 23, in die jeweils ein Magnet 22 eingeführt werden kann. Zwei Aussparungen 23 sind jeweils gegenüberliegend um die zentrale Ausnehmung 27 bzw. um eine Rotationsachse R positioniert.

Darüber hinaus ist eine Magnethalteeinrichtung 30 vorgesehen, welche zum wiederlösbaren Fixieren der Magnete 22 in einer jeweiligen Aussparung 23 ausgestaltet ist.

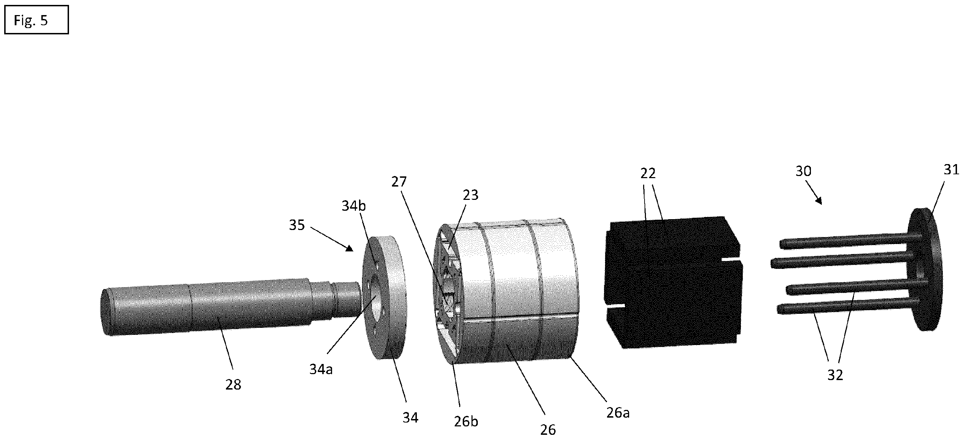

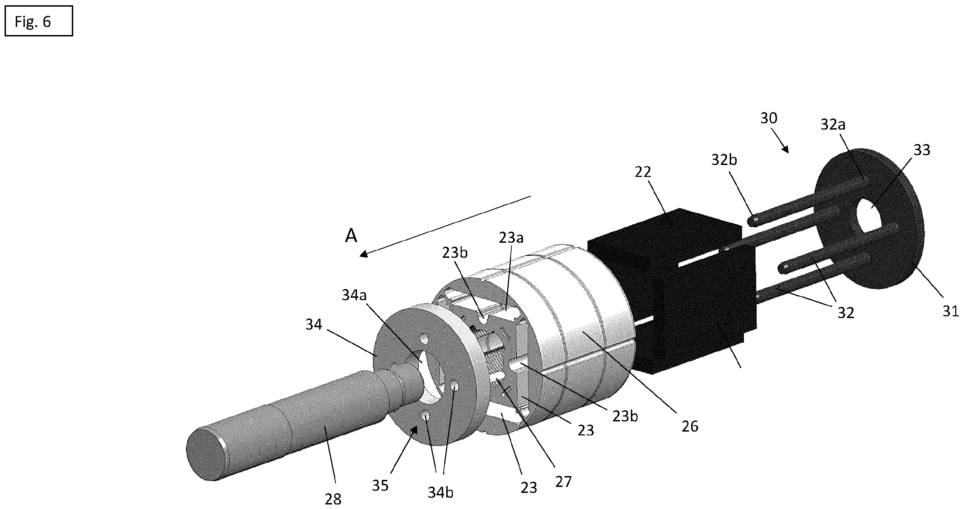

Wie in Figur 5 und 6 gezeigt, enthält die Magnethalteeinrichtung 30 gemäß einer beispielhaften Ausführungsform ein Flanschelement 31 sowie eine Anzahl an Stiftelementen 32.

In dem gezeigten Ausführungsbeispiel ist das Flanschelement 31 im Wesentlichen kreisrund mit einer zentralen Aussparung 33 ausgestaltet. Die Form und der Durchmesser des Flanschelements 31 entspricht dabei im Wesentlichen der Querschnittsform des Rotorblechpakets 26. In dem vorliegenden Ausführungsbeispiel sind vier Stiftelemente 32 vorgesehen. Die Anzahl der Stiftelemente 32 entspricht der Anzahl der Magnete 22 für den Rotor 17. Jedes Stiftelement 32 ist länglich ausgestaltete und enthält ein erstes Ende 32a sowie zweites Ende 32b. Ein Stiftelement 32 ist so mit dem ersten Ende 32a an einer Oberfläche des Flanschelements 31 positioniert, dass sich ein Stiftelement 32 orthogonal von der Oberfläche des Flanschelements 31 erstreckt. Wie in den Figuren ebenfalls gezeigt, sind die vier Stiftelemente 32 auf einem gemeinsamen Radius an der Oberfläche des Flanschelements 31 angeordnet.

Wie in Figur 6 gezeigt, enthält jede Aussparung 23 einen länglichen Anteil 23a und eine halbkreisförmigen Anteil 23b. Eine Querschnittsfläche des länglichen Anteils 23a entspricht im Wesentlichen einer Querschnittsfläche eines Magneten 22.

Des Weiteren entspricht eine Querschnittsfläche des halbkreisförmigen Anteils 23b in Wesentlichen einer Querschnittsfläche eines Stiftelements 32.

Jede Aussparung 23 ist folglich so ausgestaltet, dass gleichzeitig sowohl ein Magnet 22 als auch ein Stiftelement 32 aufgenommen werden können.

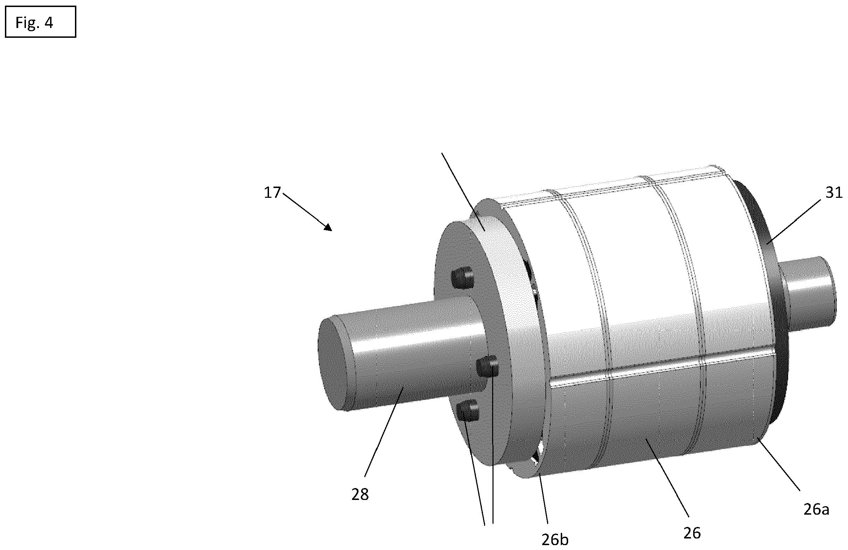

Figur 4 zeigt einen Rotor 17 in einem montierten Zustand.

Zum Montieren des Rotors 17 wird das Rotorblechpaket 26, die Rotorwelle 28, die Magnete 22 und die Magnethalteeinrichtung 30 miteinander verbunden. Hierzu werden zunächst die Magnete 22 von einem ersten Ende 26a des Rotorblechpakts 26 in die entsprechenden Aussparungen 23 des Rotorblechpakets 26 in Pfeilrichtung A geschoben. Anschließend werden die Stiftelemente 32 der Magnethalteeinrichtung 30 ebenfalls von dem ersten Ende 26a des Rotorblechpakts 26 in die Aussparungen 23 in Pfeilrichtung A geschoben. Die Magnete 22 befinden sich in den jeweiligen länglichen Anteilen 23a und die Stiftelemente 32 befinden sich in den halbkreisförmigen Anteilen 23b. Die Aussparungen 23 sind dabei so gestaltet, dass die Magnete 22 und die Stiftelemente 32 mit minimalen Spiel in den Aussparungen 23 positioniert sind. Als nächstes wird die Rotorwelle 28 in die entsprechende zentrale Aussparung 27 eingeführt.

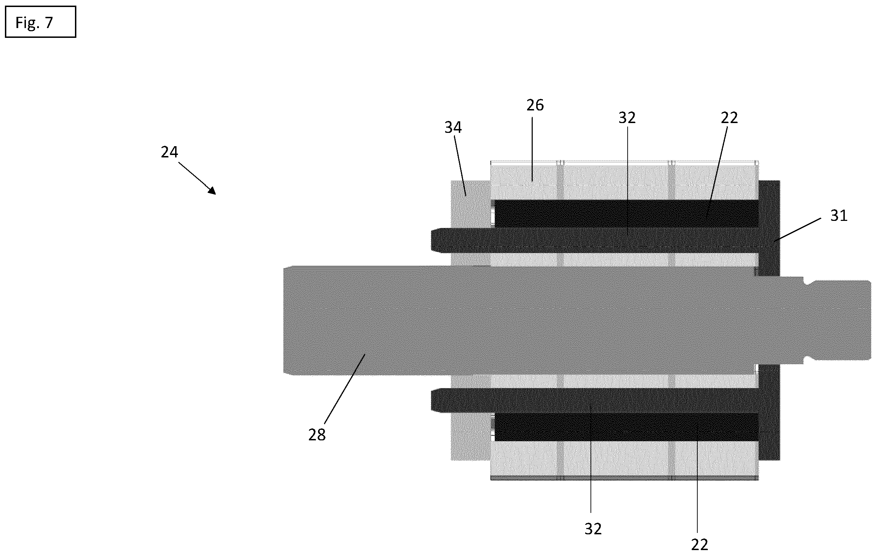

Wie in Figur 7 gezeigt, ist die jeweilige Länge LS eines Stiftelements 32 größer als die Länge LR des Rotorkörpers 18, sodass in einem verbundenen Zustand ein Stiftelement 32 in axialer Richtung über den Rotorkörper 18 hinausragt.

Optimal kann noch eine Leiterplatte 34 an einem zweiten Ende 26b des Rotorblechpakts 26 positioniert werden. Wie in den Figuren angedeutete, ist die Leiterplatte 34 kreisrund mit einer zentralen Aussparung 34a sowie einer Anzahl an Halteelementen 35 ausgestaltet. In dem vorliegenden Ausführungsbeispiel weist die Leiterplatte 34 vier Aussparungen 34b auf, welche jeweils zum Aufnehmen und Halten der freien Ende der Stiftelemente 32 mit Hilfe eines Formschlusses dienen.

### Bezugszeichen

- 1: Werkzeugmaschine
- 2: Gehäuse
- 2a: vorderes Ende des Gehäuses
- 2b: hinteres Ende des Gehäuses
- 2c: oberes Ende des Gehäuses
- 2d: unteres Ende des Gehäuses
- 3: Handgriff
- 3a: erstes Ende des Handgriffs
- 3b: zweites Ende des Handgriffs
- 4: Werkzeugaufnahme
- 5: Energieversorgung
- 6: Schnittstelle
- 8: Aktivierungsschalter
- 9: Elektromotor
- 10: Getriebevorrichtung
- 11: Antriebswelle
- 12: Steuereinrichtung
- 13: Energiespeicherzelle
- 14: Akku-Schnittstelle
- 15: Steuerungseinrichtung
- 16: Stator
- 17: Rotor
- 18: Rotorkörper
- 19: Polzahn
- 20: Akku-Gehäuse
- 21: Spulendraht
- 22: Magnet
- 23: Aussparung des Rotorkörpers
- 24: Spule
- 25: Statorblechpaket
- 26: Rotorblechpaket
- 26a: erstes Ende des Rotorblechpakts
- 26b: zweites Ende des Rotorblechpakts
- 27: zentrale Ausnehmung des Rotorkörpers
- 28: Rotorwelle
- 30: Magnethalteeinrichtung
- 31: Flanschelement
- 32: Stiftelement
- 32a: erstes Ende des Stiftelements
- 32b: zweites Ende des Stiftelements
- 33: zentralen Aussparung des Flanschelements
- 34: Leiterplatte
- 34a: zentralen Aussparung der Leiterplatte
- 34b: Aussparungen der Leiterplatte
- 35: Haltelement an Leiterplatte

- R: Rotationsachse
- LS: Länge eines Stiftelements
- LR: Länge LR des Rotorkörpers

## Patentansprüche

1. Rotor (17) für einen Elektromotor (9), insbesondere als Antrieb für eine Werkzeugmaschine (1), enthaltend einen Rotorkörper (18) mit einer zentralen Ausnehmung zum Aufnehmen und Halten einer Rotorwelle (28), wobei der Rotorkörper (18) wenigstens eine erste und zweite gegenüberliegend und um eine Rotationsachse (R) positionierte Aussparung (27) enthält, welche jeweils wenigstens zum wiederlösbaren Aufnehmen eines Magneten (22) ausgestaltet ist,
**gekennzeichnet durch** eine Magnethalteeinrichtung (30), welche zum wiederlösbaren Fixieren des wenigstens ersten und zweiten Magneten (22) in einer jeweiligen Aussparung (23) ausgestaltet ist, wenn die Magnethalteeinrichtung (30) wenigstens anteilig in die Aussparungen (23) eingeführt ist.

2. Rotor (17) nach Anspruch 1,
**dadurch gekennzeichnet, dass** die Magnethalteeinrichtung (30) ein Flanschelement (31) sowie wenigstens ein erstes und zweites Stiftelement (32) enthält, wobei das erste und zweite Stiftelement (32) zum jeweiligen Einführen in eine Aussparung (23) und das Flanschelement (31) zum Anliegen an einem Rotorkörperende (26a) ausgestaltet ist.

3. Rotor (17) nach Anspruch 1 oder 2,
**dadurch gekennzeichnet, dass** die Länge (LS) eines Stiftelements (32) größer ist als die Länge (LR) des Rotorkörpers (18), sodass in einem verbundenen Zustand ein Stiftelement (32) in axialer Richtung über den Rotorkörper (18) hinausragt.

4. Rotor (17) nach wenigstens einem der Ansprüche 1 bis 3,
**dadurch gekennzeichnet, dass** wenigstens eine Leiterplatte (34) mit wenigstens einem ersten und zweiten Halteelement (35) zum wiederlösbaren Halten eines freien Endes eines Stiftelements (32) enthalten ist.

5. Rotor (17) nach wenigstens einem der Ansprüche 1 bis 3,
**dadurch gekennzeichnet, dass** eine Aussparung (23) einen länglichen Anteil (23a) und eine halbkreisförmigen Anteil (23b) enthält, wobei eine Querschnittsfläche des länglichen Anteils (23a) im Wesentlichen einer Querschnittsfläche eines Magneten (22) und die eine Querschnittsfläche des halbkreisförmigen Anteils (23b) in Wesentlichen einer Querschnittsfläche eines Stiftelements (32) entspricht.

6. Elektromotor (9) mit einem Rotor (17) nach wenigstens einem der Ansprüche 1 bis 5.

7. Werkzeugmaschine (1) mit einem Rotor (17) nach wenigstens einem der Ansprüche 1 bis 5.
